# EUROPÄISCHE PATENTSCHRIFT

(11) **EP 3 055 618 B1**
(45) Veröffentlichungstag und Bekanntmachung des Hinweises auf die Patenterteilung: **09.01.2019**
(21) Anmeldenummer: 14780868.7
(22) Anmeldetag: 06.10.2014
(51) Int. Cl.: F23N 1/00, F16K 3/08, F24C 3/12

(54) **GASARMATUR, KOCHSTELLE UND GASKOCHGERÄT**
GAS FITTING, COOKING AREA AND GAS COOKING APPLIANCE
ROBINET DE GAZ, PLAQUE DE CUISSON ET APPAREIL DE CUISSON À GAZ

(30) Priorität: 07.10.2013 EP 13290239
(43) Veröffentlichungstag der Anmeldung: 17.08.2016
(73) Patentinhaber: BSH Hausgeräte GmbH, 81739 München (DE)
(72) Erfinder: CADEAU, Christophe, F-67100 Strasbourg (FR); NAUMANN, Jörn, 77770 Durbach (DE)
(86) Internationale Anmeldenummer: PCT/EP2014/071311
(87) Internationale Veröffentlichungsnummer: WO 2015/052119

(56) Entgegenhaltungen:
- GB-A- 682 095
- US-A- 2 572 507
- US-A- 3 751 003
- US-A- 4 723 567
- US-A1- 2002 033 464
- US-A1- 2005 284 519
- US-B1- 6 726 175

## Beschreibung

Die vorliegende Erfindung betrifft eine Gasarmatur, eine Kochstelle und ein Kochgerät. Die Kochstelle ist insbesondere eine Gaskochstelle und das Kochgerät ist insbesondere ein Gaskochgerät.

Bei vielen Gasarmaturen für Kochgeräte handelt es sich um Armaturen, bei denen mit Hilfe eines Griffschafts ein drehbarer Konus mit Querbohrungen eine veränderliche Ausgangsöffnung im Armaturengehäuse schafft. Über diese Ausgangsöffnung kann Gas zum Gasbrenner des Kochgeräts strömen. Um eine reproduzierbare Gasmengeneinstellmöglichkeit bei derartigen Konusarmaturen zu erhalten, schlagen die ES 1 057 837 U, die US 7,174,913 B2 und die US 2005/0284519 A jeweils vor, den Griffschaft mit einer Rastung zu versehen.

Die US 4,723,567 A beschreibt ein Gasventil mit einem drehbaren Ventilkörper, dessen Griffschaft in unterschiedlichen Drehwinkelpositionen verrastbar ist. Jeder Drehwinkelposition ist dabei ein definierter Gasvolumenstrom zugeordnet.

Vor diesem Hintergrund besteht eine Aufgabe der vorliegenden Erfindung darin, eine verbesserte Gasarmatur zur Verfügung zu stellen.

Demgemäß wird eine Gasarmatur zum Einstellen eines einem Gasbrenner eines Kochgeräts, insbesondere eines Gaskochgeräts, zugeführten Gasvolumenstrom mit einer Mehrzahl N von mit Hilfe eines drehbaren Griffschafts der Gasarmatur betätigbaren Auf-Zu-Ventilen, wobei jedes der Auf-Zu-Ventile einen beweglichen Ventilkörper, eine Schließfeder und einen Ventilsitz aufweist, und einer Rasteinrichtung, die dazu eingerichtet ist, den Griffschaft in vorbestimmten Drehwinkelpositionen zu verrasten, vorgeschlagen. Dabei ist jedem der Auf-Zu-Ventile der Mehrzahl N der Auf-Zu-Ventile eine der vorbestimmten Drehwinkelpositionen des Griffschafts zugeordnet.

Die Gasarmatur ist insbesondere ein Gasregelventil. Vorzugsweise ist die Gasarmatur ein gestuftes Gasregelventil oder mechanisches Stufenventil. Bei mechanischen Stufenventilen liegen jeweils N, insbesondere neun, exakt reproduzierbare Einstellmengen vor, die mit Hilfe des Griffschafts der Gasarmatur ausgewählt werden können. Mit den neun möglichen Einstellungen ist auch eine gute Darstellbarkeit der jeweiligen Drehwinkelposition gewährleistet. Jedes Auf-Zu-Ventil weist vorzugsweise einen beweglichen Ventilkörper, eine Schließfeder und einen Ventilsitz auf. Die Ventilsitze sind an einer Dichtungsverbundplatte vorgesehen. Die Schließfeder drückt bei geschlossenem Auf-Zu-Ventil den Ventilkörper auf den Ventilsitz, wodurch eine Ventilöffnung des jeweiligen Auf-Zu-Ventils verschlossen wird. Mit Hilfe einer mit dem Griffschaft gekoppelten Steuerscheibe sind die Ventilkörper bei einem Verdrehen des Griffschafts nacheinander von ihren jeweiligen Ventilsitzen abhebbar. Jedem Auf-Zu-Ventil ist dabei ein definierter Gasvolumenstrom zugeordnet. Mit der Steuerscheibe wird beim Verdrehen des Griffschafts immer zumindest ein Ventilkörper von seinem Ventilsitz abgehoben. Dadurch, dass jedem Auf-Zu-Ventil eine vorbestimmte Drehwinkel- oder Rastposition zugeordnet ist, ist eine visuelle, haptische und akustische Wahrnehmung der Raststufen bei immer wieder exakt einstellbaren Leistungsparametern gewährleistet. Aufgrund dieser Einstellmöglichkeit ist es beispielsweise möglich, dass nach Kochanweisung gekocht werden kann. Die Vielseitigkeit der Wahrnehmungsmöglichkeit in der jeweiligen Rastposition erlaubt auch behinderten Menschen eine verbesserte Bedienmöglichkeit des Geräts. Eine visuelle Beurteilung der Flammengröße beim Kochvorgang ist nicht mehr erforderlich, weil die gewünschten Leistungen über die Rastpositionen eingestellt werden können. Dadurch, dass keine visuelle Beurteilung der Flammengröße mehr notwendig ist, kann auch das Anheben oder Verrücken eines Gargutbehälters zur Beurteilung der Flammengröße entfallen. Weiterhin hat eine Gasartumstellung keinen Einfluss auf die jeweilige Leistung in der Rastposition.

Gemäß einer Ausführungsform ist die Mehrzahl der N Auf-Zu-Ventile kreisförmig angeordnet, wobei eine Winkelteilung der kreisförmig angeordneten Auf-Zu-Ventile einer Winkelteilung der vorbestimmten Drehwinkelpositionen des Griffschafts entspricht. Insbesondere ist N größer gleich 2 (N ≥ 2).

Insbesondere sind neun Auf-Zu-Ventile und zumindest neun Drehwinkel- oder Rastpositionen vorgesehen. Insbesondere kann eine weitere Drehwinkelposition vorgesehen sein, in der keines der Auf-Zu-Ventile geöffnet und somit die Gasarmatur vollständig geschlossen ist. Die Winkelteilung kann beispielsweise 36° betragen. Unter einem Winkel von 36° ist insbesondere ein Winkel von 36° ± 5°, bevorzugt von 36° ± 3°, weiter bevorzugt von 36° ± 1, weiter bevorzugt von genau 36° zu verstehen.

Gemäß einer weiteren Ausführungsform umfasst die Rasteinrichtung einen Raststift, der an dem Griffschaft montiert ist, und eine Rastscheibe, die an einer Abdeckplatte eines Gasarmaturgehäuses der Gasarmatur angebracht ist. Dabei ist der Raststift dazu eingerichtet, in die Rastscheibe formschlüssig einzugreifen.

Der Raststift weist vorzugsweise einen kreisrunden Querschnitt auf. Der Raststift kann ein Stahlstift sein. Das Gasarmaturgehäuse kann als Ventilgehäuse bezeichnet werden. Das Gasarmaturgehäuse kann ein Aluminiumdruckgussbauteil sein.

Gemäß einer weiteren Ausführungsform weist die Rastscheibe Rastnuten auf, wobei jeder vorbestimmten Drehwinkelposition des Griffschafts eine jeweilige Rastnut zugeordnet ist.

Vorzugsweise weist die Rastscheibe zehn Rastnuten auf. Die Rastnuten sind vorzugsweise gleichmäßig über einen Umfang der Rastscheibe verteilt angeordnet. Die Rastscheibe ist vorzugsweise ein Biege-/Stanzbauteil. Die Rastscheibe kann aus einem Stahlwerkstoff gefertigt sein.

Gemäß einer weiteren Ausführungsform ist der Raststift in einer Bohrung des Griffschafts aufgenommen und senkrecht zu einer Längsachse des Griffschafts angeordnet, wobei der Raststift asymmetrisch aus der Bohrung des Griffschafts herausragt.

Das heißt, der Raststift ragt an einer Seite der Bohrung weiter aus dem Griffschaft heraus als an der anderen. Hierdurch wird eine Überbestimmtheit der Rastpositionen durch ein beidseitiges Einrasten des Raststifts in die Rastnuten verhindert. Insbesondere schneiden sich eine Längsachse des Raststifts und die Längsachse des Griffschafts. Der Raststift kann in die Bohrung eingepresst, eingeklebt, eingelötet und/oder eingeschweißt sein. Vorzugsweise weist der Raststift umfänglich eine Verzahnung auf, die in das Material des Griffschafts eingreift. Hierdurch wird ein Verdrehen des Raststifts in der Bohrung und damit eine Lockerung des Raststifts verhindert.

Gemäß einer weiteren Ausführungsform ist der Raststift mit Hilfe einer Federeinrichtung gegen die Rastscheibe vorgespannt.

Die Federeinrichtung ist insbesondere eine Zylinder- oder Schraubenfeder. Die Feder ist vorzugsweise eine Druckfeder.

Gemäß einer weiteren Ausführungsform ist zwischen dem Raststift und der Federeinrichtung eine Unterlegscheibe vorgesehen, die eine Verdrehsicherung aufweist, die dazu eingerichtet ist, in einen Drehweganschlag einer Abdeckplatte eines Gasarmaturgehäuses der Gasarmatur formschlüssig einzugreifen.

Der Drehweganschlag ist eine nach innen stehende Rippe der Abdeckplatte ausgebildet. Der Drehweganschlag dient weiterhin der Begrenzung des Drehwegs des Griffschafts.

Gemäß einer weiteren Ausführungsform ist die Federeinrichtung zwischen dem Gasarmaturgehäuse und der Unterlegscheibe angeordnet.

Die Federeinrichtung drückt die Unterlegscheibe vorzugsweise gegen den Raststift. Bei einem Verdrehen des Griffschafts gleitet der Raststift auf der Unterlegscheibe. Dadurch, dass die Unterlegscheibe die Verdrehsicherung aufweist, wird ein ungewolltes Mitdrehen der Unterlegscheibe, das zu einer Spanbildung an der Unterlegscheibe führen könnte, unterbunden.

Gemäß einer weiteren Ausführungsform weist das Gasarmaturgehäuse eine Aufnahmetasche zum Aufnehmen der Federeinrichtung auf, wobei bei einem Eindrücken des Griffschafts gegen eine Federkraft der Federeinrichtung in das Gasarmaturgehäuse die Unterlegscheibe nur auf einer Außenwand der Aufnahmetasche aufliegt.

Die Außenwand der Aufnahmetasche liegt vorzugsweise höher als eine Innenwand derselben. Hierdurch wird eine Spanbildung an der Innenwand, die zu einem Ausfall der Gasarmatur führen könnte, zuverlässig verhindert.

Gemäß einer weiteren Ausführungsform weist die Rastscheibe eine Verriegelungsnut auf, in der der Raststift in einer Drehwinkelanfangsposition des Griffschafts anordenbar ist, wobei die Gasarmatur in der Drehwinkelanfangsposition vollständig geschlossen ist.

Die Verriegelungsnut ist vorzugsweise als Vertiefung einer Rastnut ausgebildet. Vorzugsweise ist die Verriegelungsnut tiefer als ein Radius des Raststifts.

Gemäß einer weiteren Ausführungsform ist der Raststift durch ein Hineindrücken des Griffschafts entgegen einer Federkraft der Federeinrichtung in ein Gasarmaturgehäuse der Gasarmatur aus der Verriegelungsnut heraushebbar.

Dadurch ist zum Einschalten eines Kochgeräts mit einer derartigen Gasarmatur ein gleichzeitiges Eindrücken und Drehen des Griffschafts erforderlich. Hierdurch können sicherheitstechnische Anforderungen an ein derartiges Kochgerät eingehalten werden.

Gemäß einer weiteren Ausführungsform ist die Rastscheibe mit einer Abdeckplatte eines Gasarmaturgehäuses der Gasarmatur verstemmt.

Hierzu kann die Rastscheibe Ausnehmungen aufweisen. Durch die Ausnehmungen können vorzugsweise stiftförmige Erhöhungen der Abdeckplatte hindurchgeführt werden, die zum Verbinden der Abdeckplatte mit der Rastscheibe insbesondere plastisch verformt werden. Somit ist eine dauerhafte und unlösbare Verbindung der Rastscheibe und der Abdeckplatte gewährleistet.

Weiterhin wird eine Kochstelle, insbesondere eine Gaskochstelle, mit einer derartigen Gasarmatur vorgeschlagen. Die Kochstelle ist vorzugsweise ein Haushaltsgerät.

Weiterhin wird ein Kochgerät, insbesondere ein Gaskochgerät mit einer derartigen Kochstelle und/oder einer derartigen Gasarmatur vorgeschlagen. Das Gaskochgerät ist insbesondere ein Haushaltsgerät, vorzugsweise ein Gasherd.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Schnittansicht einer Ausführungsform einer Gasarmatur;
Fig. 2 zeigt eine schematische perspektivische Ansicht einer Ausführungsform einer Dichtungsverbundplatte der Gasarmatur gemäß der Fig. 1;
Fig. 3 zeigt eine schematische Detailschnittansicht der Gasarmatur gemäß der Fig. 1;
Fig. 4 zeigt eine schematische perspektivische Ansicht einer Ausführungsform einer Rastscheibe der Gasarmatur gemäß der Fig. 1;
Fig. 5 zeigt eine schematische perspektivische Ansicht einer Ausführungsform einer Abdeckplatte der Gasarmatur gemäß der Fig. 1;
Fig. 6 zeigt eine weitere schematische Detailschnittansicht der Gasarmatur gemäß der Fig. 1;
Fig. 7 zeigt eine schematische Schnittansicht der Abdeckplatte gemäß der Fig. 5;
Fig. 8 zeigt eine schematische Seitenansicht der Gasarmatur gemäß der Fig. 1;
Fig. 9 zeigt eine schematische perspektivische Ansicht der Abdeckplatte gemäß der Fig. 4 und 5; und
Fig. 10 zeigt eine weitere schematische Detailschnittansicht der Gasarmatur gemäß der Fig. 1.

In den Figuren sind gleiche oder funktionsgleiche Elemente mit denselben Bezugszeichen versehen worden, sofern nichts anderes angegeben ist.

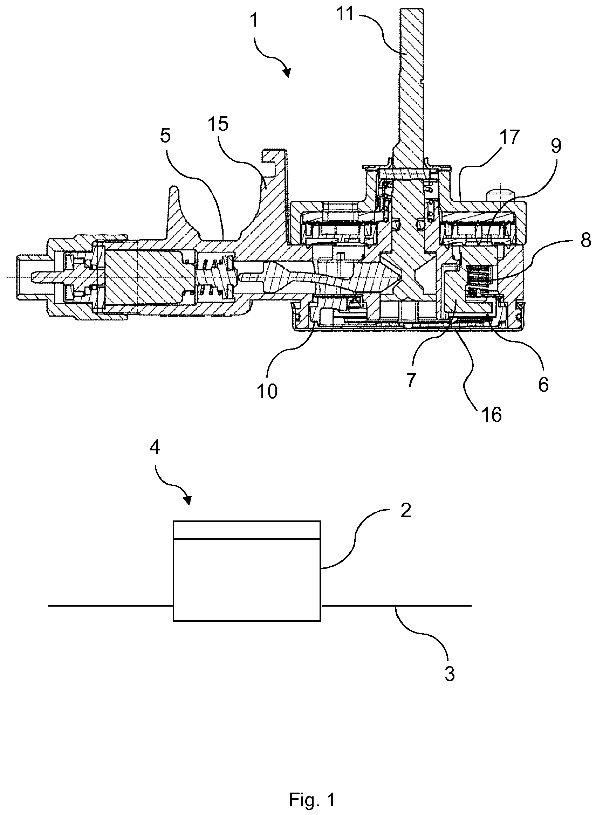

Die Fig. 1 zeigt eine Gasarmatur 1, welche zum Einstellen eines einem Gasbrenner 2 einer Kochstelle 3, insbesondere einer Gaskochstelle, eines Kochgeräts 4, insbesondere eines Gaskochgeräts, zugeführten Gasvolumenstroms geeignet ist. Die Gasarmatur 1 ist vorzugsweise ein, insbesondere gestuftes, Gasregelventil. In der oberen Hälfte der Fig. 1 ist die Gasarmatur 1 und in der unteren Hälfte der Fig. 1 ist das Kochgerät 4 mit der Kochstelle 3 gezeigt. Das Kochgerät 4 kann die Gasarmatur 1 aufweisen.

Die Gasarmatur 1 weist, wie in Fig. 1 gezeigt, einen Gaseingang 5 auf, mit dem sie beispielsweise an eine Hauptgasleitung des Kochgeräts 4 angeschlossen ist. An dem Gaseingang 5 steht das zur Verbrennung vorgesehene Gas mit einem konstanten Druck, von beispielsweise 20 mbar oder 50 mbar an. An einem Gasausgang der Gasarmatur 1 wird eine beispielsweise zu dem Gasbrenner 2 des Kochgeräts 4 führende Gasleitung angeschlossen.

Der Gaseingang 5 ist über einen Gasausgangsraum der Gasarmatur 1 mit einer Eingangsseite von im vorliegenden Ausführungsbeispiel neun Auf-Zu-Ventilen 6 verbunden. Insbesondere ist eine Mehrzahl N von Auf-Zu-Ventilen 6 vorgesehen. Durch Öffnen der Auf-Zu-Ventile 6 ist der Gaseingang 5 jeweils mit dem Gasausgangsraum verbunden. Jedes Auf-Zu-Ventil 6 weist einen beweglichen Ventilkörper 7, eine Schließfeder 8 und einen Ventilsitz 9 auf. Die Schließfeder 8 drückt bei geschlossenem Auf-Zu-Ventil 6 den Ventilkörper 7 auf den Ventilsitz 9, wodurch eine Ventilöffnung des jeweiligen Auf-Zu-Ventils 6 verschlossen wird.

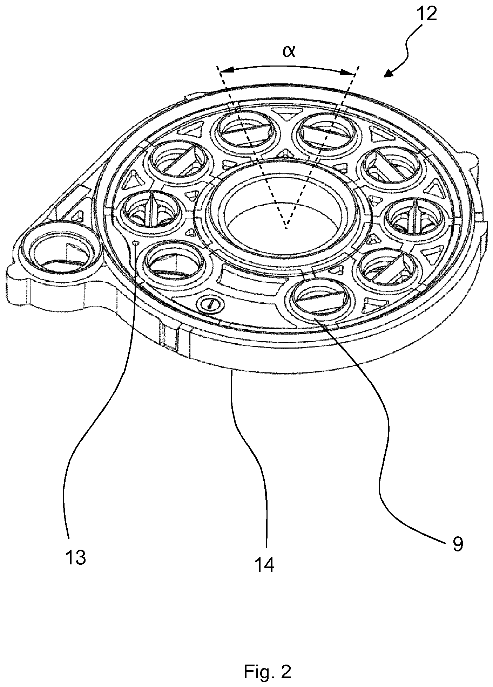

Ferner ist eine Steuerscheibe 10 vorgesehen, die mit einem drehbaren Griffschaft 11 der Gasarmatur 1 gekoppelt ist und die dazu eingerichtet ist, ein jeweiliges Auf-Zu-Ventil 6 je nach Stellung des Griffschafts 11 von seinem jeweiligen Ventilsitz 9 abzuheben. Die Ventilsitze 9 sind in einer in Fig. 2 gezeigten Dichtungsverbundplatte 12 vorgesehen. Die Dichtungsverbundplatte 12 weist vorzugsweise eine Mehrzahl N Ventilsitze 9 auf. Insbesondere entspricht die Mehrzahl N der Ventilsitze 9 der Mehrzahl N der Auf-Zu-Ventile 6. Insbesondere ist jedem Auf-Zu-Ventil 6 ein Ventilsitz 9 zugeordnet.

Die Dichtungsverbundplatte 12 weist neben den Ventilsitzen 9 eine Druckplatte 13 und eine untere Gasverteilungsplatte 14 auf. Die Ventilsitze 9 sind vorzugsweise kreisförmig angeordnet. Insbesondere sind auch die Auf-Zu-Ventile 6 kreisförmig angeordnet, wobei die Auf-Zu-Ventile 6 mit einer vorbestimmten Winkelteilung α voneinander beabstandet angeordnet sind. Beispielsweise beträgt die Winkelteilung α 36°.

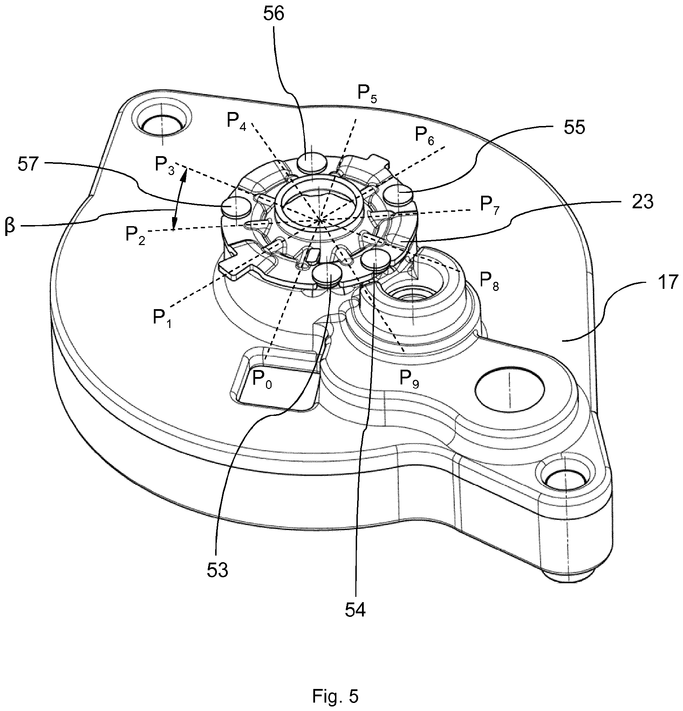

Die Gasarmatur 1 weist ferner ein in den Fig. 1, 3, 6, 8 und 10 gezeigtes Ventilgehäuse oder Gasarmaturgehäuse 15, in dem die Auf-Zu-Ventile 6 und die Dichtungsverbundplatte 12 aufgenommen sind, eine Gehäuseabdeckung 16 und eine Abdeckplatte 17 auf (siehe Fig. 5). Der Griffschaft 11 ist durch die Abdeckplatte 17 geführt und in dem Gasarmaturgehäuse 15 drehbar aufgenommen.

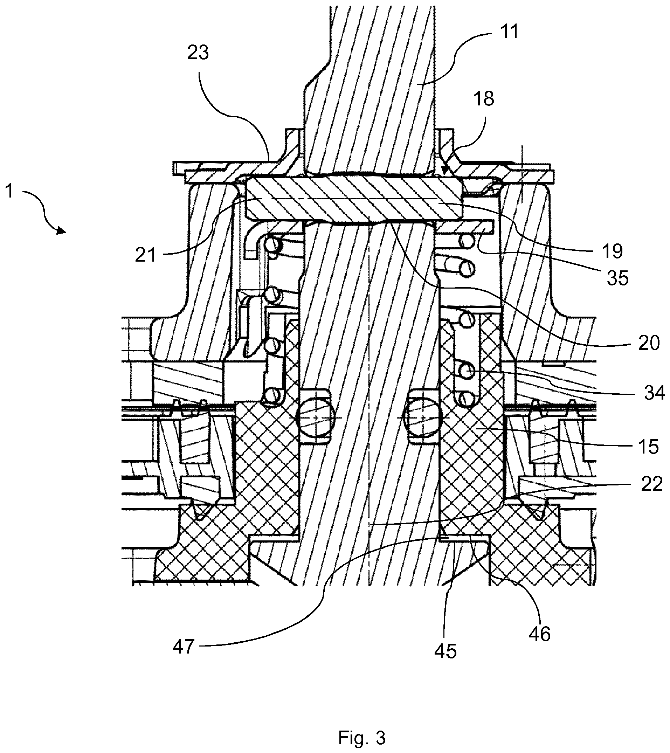

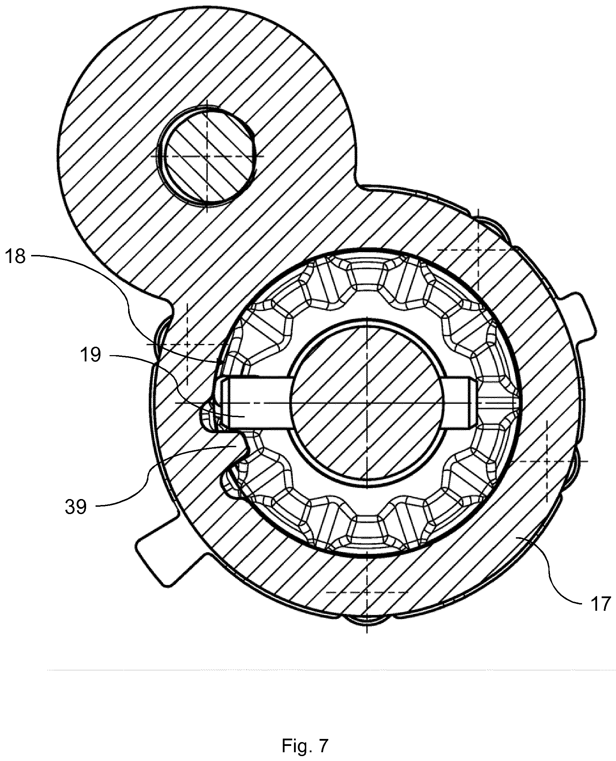

Die Gasarmatur 1 weist weiterhin eine in den Fig. 3 und 7 gezeigte Rasteinrichtung 18 auf, die dazu eingerichtet ist, den Griffschaft 11 in vorbestimmten Drehwinkelpositionen P₀ - P₉ (siehe Fig. 5) zu verrasten. Dabei ist jedem der Auf-Zu-Ventile 6 der Mehrzahl N der Auf-zu-Ventile 6 eine der vorbestimmten Drehwinkelpositionen P₀ - P₉ des Griffschafts 11 zugeordnet. Insbesondere entspricht die Winkelteilung α (siehe Fig. 2) der kreisförmig angeordneten Auf-Zu-Ventile 6 einer Winkelteilung β (siehe Fig. 5) der vorbestimmten Drehwinkelpositionen P₀ - P₉ des Griffschafts 11. In der Drehwinkelposition P₀ ist die Gasarmatur 1 vollständig geschlossen. Die Drehwinkelposition P₁ stellt eine Kleinbrandstufe der Gasarmatur 1 dar.

Die Rasteinrichtung 18 weist einen Raststift 19 auf, der an dem Griffschaft 11 montiert ist. Insbesondere ist der Raststift 19 in einer Bohrung 20 des Griffschafts 11 aufgenommen. Vorzugsweise ist der Raststift 19 derart angeordnet, dass eine Mittelachse oder Längsachse 21 des Raststifts 19 eine Mittelachse oder Längsachse 22 des Griffschafts 11 schneidet. Vorzugsweise ist der Raststift 19 senkrecht zu der Längsachse 22 des Griffschafts 11 angeordnet. Der Raststift 19 ragt vorzugsweise asymmetrisch aus der Bohrung 20 des Griffschafts 11 heraus (siehe Fig. 1, 3, 6 und 10). Das heißt, der Raststift 19 ragt auf einer Seite der Bohrung 20 weiter aus dem Griffschaft 11 heraus als auf der anderen.

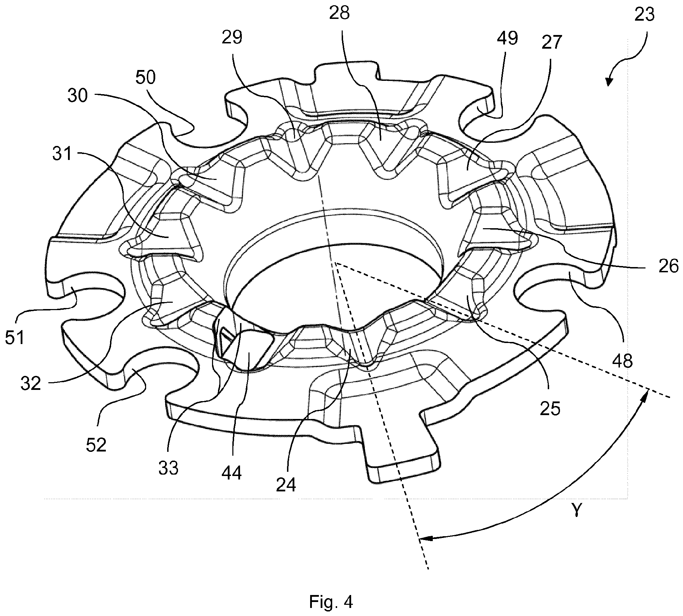

Die Rasteinrichtung 18 weist neben dem Raststift 19 eine in Fig. 4 gezeigte Rastscheibe 23 auf, die an der Abdeckplatte 17 des Gasarmaturgehäuses 15 angebracht ist. Der Raststift 19 ist vorzugsweise dazu eingerichtet, in die Rastscheibe 23 formschlüssig einzugreifen. Hierzu weist die Rastscheibe 23 Rastnuten 24 - 33 auf. Die Rastnuten 24 - 33 sind über einen Umfang der Rastscheibe 23 gleichmäßig verteilt angeordnet. Vorzugsweise ist jeder vorbestimmten Drehwinkelposition P₀ - P₉ des Griffschafts 11 eine jeweilige Rastnut 24 - 33 zugeordnet. Eine Winkelteilung γ der Rastnuten 24 - 33 entspricht vorzugsweise den Winkelteilungen α, β (siehe Fig. 4). Insbesondere ist der Drehwinkelposition P₁ die Rastnut 24 und der Drehwinkelposition P₉ die Rastnut 32 zugeordnet. Der Drehwinkelposition P₀ ist insbesondere die Rastnut 33 zugeordnet.

Die Rasteinrichtung 18 weist ferner eine in den Fig. 1, 3, 6, 8 und 10 gezeigte Federeinrichtung 34 auf, mit deren Hilfe der Raststift 19 gegen die Rastscheibe 23 vorgespannt ist. Die Federeinrichtung 34 ist insbesondere eine Schraubenfeder. Vorzugsweise ist die Federeinrichtung 34 eine Druckfeder. Die Federeinrichtung 34 ist zwischen dem Gasarmaturgehäuse 15 und einer unter dem Raststift 19 angeordneten Unterlegscheibe 35 angeordnet. Die Unterlegscheibe 35 ist insbesondere zwischen dem Raststift 19 und der Federeinrichtung 34 vorgesehen. Der Raststift 19 ist dazu eingerichtet, auf der Unterlegscheibe 35 zu gleiten.

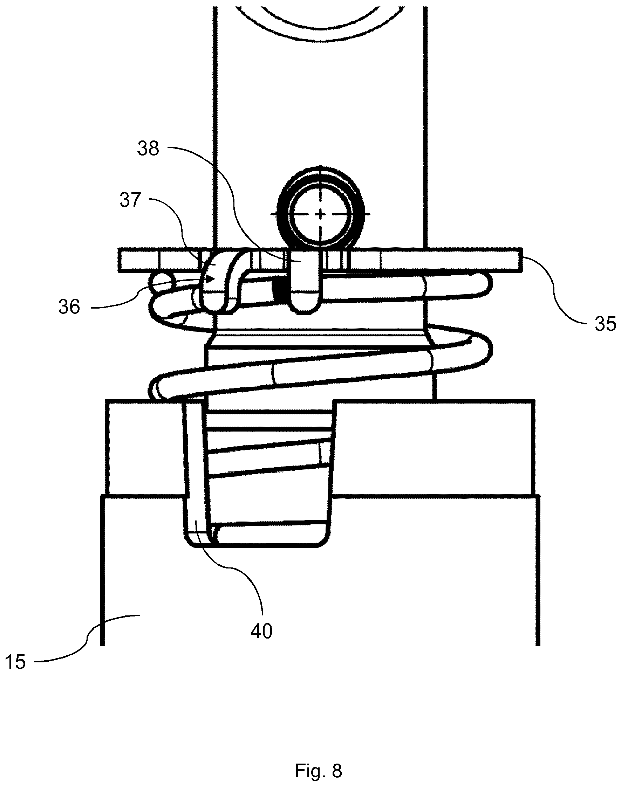

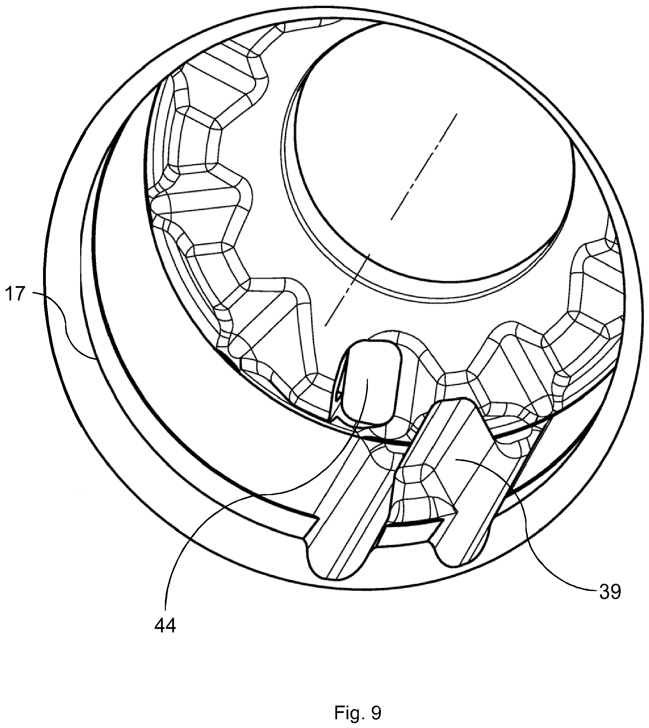

Die Unterlegscheibe 35 weist, wie in der Fig. 8 gezeigt, eine Verdrehsicherung 36 auf. Die Verdrehsicherung 36 weist vorzugsweise zwei voneinander beabstandet angeordnete Greifarme 37, 38 auf. Die Greifarme 37, 38 sind dazu eingerichtet, einen Drehweganschlag 39 der Abdeckplatte 17 zu umgreifen (siehe Fig. 9). Ferner ist, wie in Fig. 8 gezeigt, in dem Gasarmaturgehäuse 15 eine Tasche 40 vorgesehen, in die die Verdrehsicherung 36 der Unterlegscheibe 35 eintauchen kann. In den Drehwinkelpositionen P₀ und P₁ kann der Raststift 19 an dem Drehweganschlag 39 anliegen.

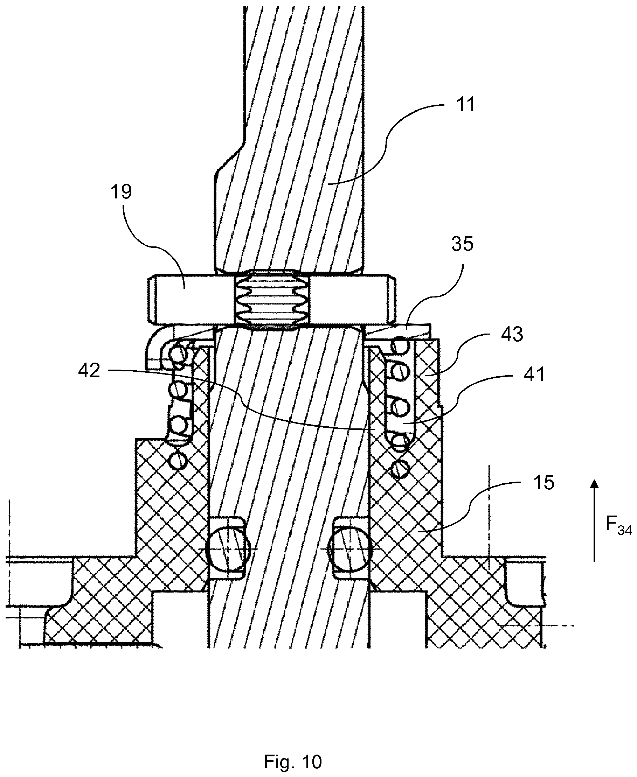

Das Gasarmaturgehäuse 15 weist, wie Fig. 10 zeigt, weiterhin eine Aufnahmetasche 41 zum Aufnehmen der Federeinrichtung 34 auf. Die Aufnahmetasche 41 weist vorzugsweise eine Innenwand 42 und eine Außenwand 43 auf. Die Tasche 40 ist vorzugsweise nur in der Außenwand 43 vorgesehen. Die Innenwand 42 und die Außenwand 43 sind vorzugsweise rohrförmig, wobei die Außenwand 43 koaxial zu der Innenwand 42 angeordnet ist und diese vollständig umläuft. Insbesondere ist die Außenwand 43 höher als die Innenwand 42, so dass bei einem Eindrücken des Griffschafts 11 gegen eine Federkraft F₃₄ der Federeinrichtung 34 in das Gasarmaturgehäuse 15 die Unterlegscheibe 35 nur auf der Außenwand 43 der Aufnahmetasche 41 aufliegt. Hierdurch wird beim Eindrücken des Griffschafts 11 in das Gasarmaturgehäuse 15 verhindert, dass die Unterlegscheibe 35 auf der Innenwand 42 aufliegt. Dadurch ist insbesondere gewährleistet, dass von der Innenwand 42 mittels der Unterlegscheibe 35 keine Späne abgetragen werden können, die zwischen Griffschaft 11 und Gasarmaturgehäuse 15 eindringen könnten und so den Griffschaft 11 blockieren würden.

Die Rastscheibe 23 weist ferner eine Verriegelungsnut 44 auf, in der der Raststift 19 in einer Drehwinkelanfangsposition P₀ des Griffschafts 11 anordenbar ist (siehe Fig. 4 und 9). In der Drehwinkelanfangsposition P₀ ist die Gasarmatur 1 vorzugsweise vollständig geschlossen. Der Raststift 19 ist durch ein Hineindrücken des Griffschafts 11 entgegen der Federkraft F₃₄ der Federeinrichtung 34 in das Gasarmaturgehäuse 15 der Gasarmatur 1 aus der Verriegelungsnut 44 heraushebbar.

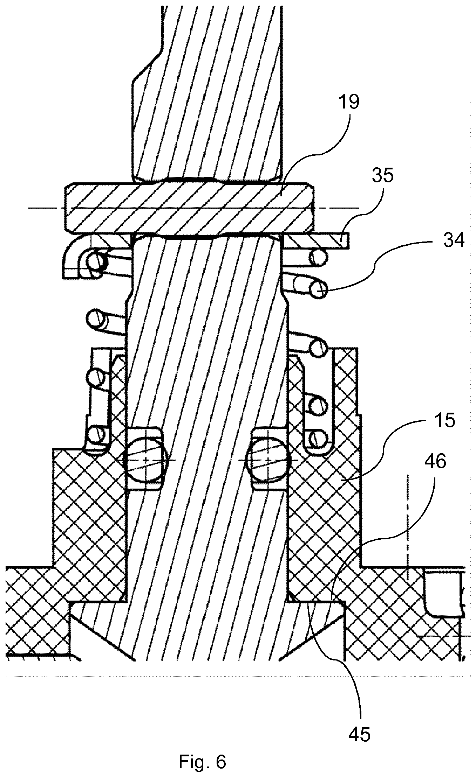

Bei nicht montierter Abdeckplatte 17 drückt, wie in der Fig. 6 gezeigt, die Federeinrichtung 34 den Griffschaft 11 mit einem an diesen vorgesehenen umlaufenden Absatz 45 gegen einen korrespondierenden Absatz 46 des Gasarmaturgehäuses 15. Bei montierter Abdeckplatte 17 ist, wie die Fig. 3 zeigt, zwischen den Absätzen 45, 46 ein Luftspalt 47 vorgesehen.

Die Rastscheibe 23 ist mit der Abdeckplatte 17 des Gasarmaturgehäuses 15 vorzugsweise verstemmt. Hierzu weist die Rastscheibe 23 vorzugsweise Ausnehmungen 48 - 52 auf. Durch die Ausnehmungen 48 - 52 sind stiftförmige Erhöhungen 53 - 57 der Abdeckplatte 17 hindurchgeführt, die zum Verbinden der Abdeckplatte 17 und der Rastscheibe 23 plastisch verformt werden.

Obwohl die vorliegende Erfindung anhand von Ausführungsbeispielen beschrieben wurde, ist sie vielfältig modifizierbar.

### Verwendete Bezugszeichen:

- 1: Gasarmatur
- 2: Gasbrenner
- 3: Kochstelle
- 4: Kochgerät
- 5: Gaseingang
- 6: Auf-Zu-Ventil
- 7: Ventilkörper
- 8: Schließfeder
- 9: Ventilsitz
- 10: Steuerscheibe
- 11: Griffschaft
- 12: Dichtungsverbundplatte
- 13: Druckplatte
- 14: Gasverteilungsplatte
- 15: Gasarmaturgehäuse
- 16: Gehäuseabdeckung
- 17: Abdeckplatte
- 18: Rasteinrichtung
- 19: Raststift
- 20: Bohrung
- 21: Längsachse
- 22: Längsachse
- 23: Rastscheibe
- 24: Rastnut
- 25: Rastnut
- 26: Rastnut
- 27: Rastnut
- 28: Rastnut
- 29: Rastnut
- 30: Rastnut
- 31: Rastnut
- 32: Rastnut
- 33: Rastnut
- 34: Federeinrichtung
- 35: Unterlegscheibe
- 36: Verdrehsicherung
- 37: Greifarm
- 38: Greifarm
- 39: Drehweganschlag
- 40: Tasche
- 41: Aufnahmetasche
- 42: Innenwand
- 43: Außenwand
- 44: Verriegelungsnut
- 45: Absatz
- 46: Absatz
- 47: Luftspalt
- 48: Ausnehmung
- 49: Ausnehmung
- 50: Ausnehmung
- 51: Ausnehmung
- 52: Ausnehmung
- 53: stiftförmige Erhöhung
- 54: stiftförmige Erhöhung
- 55: stiftförmige Erhöhung
- 56: stiftförmige Erhöhung
- 57: stiftförmige Erhöhung

- F₃₄: Federkraft
- P₀: Drehwinkelposition
- P₁: Drehwinkelposition
- P₂: Drehwinkelposition
- P₃: Drehwinkelposition
- P₄: Drehwinkelposition
- P₅: Drehwinkelposition
- P₆: Drehwinkelposition
- P₇: Drehwinkelposition
- P₈: Drehwinkelposition
- P₉: Drehwinkelposition
- α: Winkelteilung
- β: Winkelteilung
- γ: Winkelteilung

## Patentansprüche

1. Gasarmatur (1) zum Einstellen eines einem Gasbrenner (2) eines Kochgeräts (4), insbesondere eines Gaskochgeräts, zugeführten Gasvolumenstroms, mit einer Mehrzahl N von mit Hilfe eines drehbaren Griffschafts (11) der Gasarmatur (1) betätigbaren Auf-Zu-Ventilen (6), wobei jedes der Auf-Zu-Ventile (6) einen beweglichen Ventilkörper (7), eine Schließfeder (8) und einen Ventilsitz (9) aufweist, und einer Rasteinrichtung (18), die dazu eingerichtet ist, den Griffschaft (11) in vorbestimmten Drehwinkelpositionen (P₀ - P₉) zu verrasten, wobei jedem der Auf-Zu-Ventile (6) der Mehrzahl N der Auf-Zu-Ventile (6) eine der vorbestimmten Drehwinkelpositionen (P₀ - P₉) des Griffschafts (11) zugeordnet ist.

2. Gasarmatur nach Anspruch 1, **dadurch gekennzeichnet, dass** die Mehrzahl der N Auf-Zu-Ventile (6) kreisförmig angeordnet ist, wobei eine Winkelteilung (α) der kreisförmig angeordneten Auf-Zu-Ventile (6) einer Winkelteilung (β) der vorbestimmten Drehwinkelpositionen (P₀ - P₉) des Griffschafts (11) entspricht.

3. Gasarmatur nach Anspruch 1 oder 2, **dadurch gekennzeichnet, dass** die Rasteinrichtung (18) einen Raststift (19), der an dem Griffschaft (11) montiert ist, und eine Rastscheibe (23), die an einer Abdeckplatte (17) eines Gasarmaturgehäuses (15) der Gasarmatur (1) angebracht ist, umfasst, wobei der Raststift (19) dazu eingerichtet ist, in die Rastscheibe (23) formschlüssig einzugreifen.

4. Gasarmatur nach Anspruch 3, **dadurch gekennzeichnet, dass** die Rastscheibe (23) Rastnuten (24 - 33) aufweist, wobei jeder vorbestimmten Drehwinkelposition (P₀ - P₉) des Griffschafts (11) eine jeweilige Rastnut (24 - 33) zugeordnet ist.

5. Gasarmatur nach Anspruch 3 oder 4, **dadurch gekennzeichnet, dass** der Raststift (19) in einer Bohrung (20) des Griffschafts (11) aufgenommen und senkrecht zu einer Längsachse (22) des Griffschafts (11) angeordnet ist, wobei der Raststift (19) asymmetrisch aus der Bohrung (20) des Griffschafts (11) herausragt.

6. Gasarmatur nach einem der Ansprüche 3 - 5, **dadurch gekennzeichnet, dass** der Raststift (19) mit Hilfe einer Federeinrichtung (34) gegen die Rastscheibe (23) vorgespannt ist.

7. Gasarmatur nach Anspruch 6, **dadurch gekennzeichnet, dass** zwischen dem Raststift (19) und der Federeinrichtung (34) eine Unterlegscheibe (35) vorgesehen ist, die eine Verdrehsicherung (36) aufweist, die dazu eingerichtet ist, in einen Drehweganschlag (39) einer Abdeckplatte (17) eines Gasarmaturgehäuses (15) der Gasarmatur (1) formschlüssig einzugreifen.

8. Gasarmatur nach Anspruch 7, **dadurch gekennzeichnet, dass** die Federeinrichtung (34) zwischen dem Gasarmaturgehäuse (15) und der Unterlegscheibe (35) angeordnet ist.

9. Gasarmatur nach Anspruch 7 oder 8, **dadurch gekennzeichnet, dass** das Gasarmaturgehäuse (15) eine Aufnahmetasche (41) zum Aufnehmen der Federeinrichtung (34) aufweist, wobei bei einem Eindrücken des Griffschafts (11) gegen eine Federkraft (F₃₄) der Federeinrichtung (34) in das Gasarmaturgehäuse (15) die Unterlegscheibe (35) nur auf einer Außenwand (43) der Aufnahmetasche (41) aufliegt.

10. Gasarmatur nach einem der Ansprüche 3 - 9, **dadurch gekennzeichnet, dass** die Rastscheibe (23) eine Verriegelungsnut (44) aufweist, in der der Raststift (19) in einer Drehwinkelanfangsposition (P₀) des Griffschafts (11) anordenbar ist, wobei die Gasarmatur (1) in der Drehwinkelanfangsposition (P₀) vollständig geschlossen ist.

11. Gasarmatur nach Anspruch 10, **dadurch gekennzeichnet, dass** der Raststift (19) durch ein Hineindrücken des Griffschafts (11) entgegen einer Federkraft (F₃₄) der Federeinrichtung (34) in ein Gasarmaturgehäuse (15) der Gasarmatur (1) aus der Verriegelungsnut (44) heraushebbar ist.

12. Gasarmatur nach einem der Ansprüche 3 - 11, **dadurch gekennzeichnet, dass** die Rastscheibe (23) mit einer Abdeckplatte (17) eines Gasarmaturgehäuses (15) der Gasarmatur (1) verstemmt ist.

13. Kochstelle (3), insbesondere Gaskochstelle, mit einer Gasarmatur (1) nach einem der Ansprüche 1 - 12.

14. Kochgerät (4), insbesondere Gaskochgerät, mit einer Kochstelle (3) nach Anspruch 13 und/oder einer Gasarmatur (1) nach einem der Ansprüche 1 - 12.

## Claims

1. Gas fitting (1) for setting a gas volume flow supplied to a gas burner (2) of a cooking appliance (4), in particular a gas cooking appliance, with a plurality N of on-off valves (6) able to be actuated with the aid of a rotatable handle stem (11) of the gas fitting (1), wherein each of the on-off valves (6) has a movable valve body (7), a closure spring (8) and an valve seat (9), and a latching device (18) which is configured to latch the handle stem (11) in predefined rotation angle positions (Po - P₉), wherein each of the on-off valves (6) of the plurality N of on-off valves (6) is assigned one of the predefined rotation angle positions (Po - P₉) of the handle stem (11).

2. Gas fitting according to claim 1, **characterised in that** the plurality N of on-off valves (6) is arranged in the shape of a circle, wherein the angular division (α) of the on-off valves (6) arranged in the shape of a circle corresponds to an angular division (β) of the predefined rotation angle positions (Po - P₉) of the handle stem (11).

3. Gas fitting according to claim 1 or 2, **characterised in that** the latching device (16) comprises a latching pin (19) which is installed on the handle stem (11), and a latching disc (23), which is attached to a cover plate (17) of a gas fitting housing (15) of the gas fitting (1), wherein the latching pin (19) is configured to engage into the latching disc (23) by making a form fit.

4. Gas fitting according to claim 3, **characterised in that** the latching disc (23) has latching grooves (24 - 33), wherein each predefined rotation angle position (Po - P₉) of the handle stem (11) is assigned a respective latching groove (24 - 33).

5. Gas fitting according to claim 3 or 4, **characterised in that** the latching pin (19) is accommodated in a hole (20) in the handle stem (11) and is arranged at right angles to a longitudinal axis (22) of the handle stem (11), wherein the latching pin (19) projects asymmetrically from the hole (20) in the handle stem (11).

6. Gas fitting according to one of claims 3 - 5, **characterised in that** the latching pin (19) is pre-tensioned with the aid of the spring device (34) against the latching disc (23).

7. Gas fitting according to claim 6, **characterised in that** a washer (35) is provided between the latching pin (19) and the spring device (34), which has an anti-rotation facility (36), which is configured to engage in a rotational movement stop (39) of a cover plate (17) of a gas fitting housing (15) of the gas fitting (1) in a form fit.

8. Gas fitting according to claim 7, **characterised in that** the spring device (34) is arranged between the gas fitting housing (15) and the washer (35).

9. Gas fitting according to claim 7 or 8, **characterised in that** the gas fitting housing (15) has a receiving pocket (41) to receive the spring device (34), wherein, when the handle stem is pushed into the gas fitting housing (15) against the spring force (F₃₄) of the spring device (34), the washer (35) only rests on an outer wall (43) of the pocket (41).

10. Gas fitting according to one of claims 3 - 9, **characterised in that** the latching disc (23) has a locking groove (44), in which the latching pin (19) is able to be arranged in a rotation angle start position (Po) of the handle stem, wherein the gas fitting is fully closed in the rotation angle start position (Po).

11. Gas fitting according to claim 10, **characterised in that**, by pushing the handle stem (11) into a gas fitting housing (15) of the gas fitting (1) against the spring pressure (F₃₄) of the spring device (34), the latching pin (19) is able to be lifted out of the locking groove (44).

12. Gas fitting according to one of claims 3 - 11, **characterised in that** the latching disc (23) makes a push fit with a cover plate (17) of a gas fitting housing (15) of the gas fitting (1).

13. Cooking area (3), in particular a gas cooking area, with a gas fitting (1) according to one of claims 1 - 12.

14. Cooking appliance (4), in particular a gas cooking appliance, with a cooking area (3) according to claim 13 and/or a gas fitting (1) according to one of claims 1 - 12.

## Revendications

1. Robinet de gaz (1) destiné à régler un débit volumique fourni à un brûleur de gaz (2) d'un appareil de cuisson (4), notamment d'un appareil de cuisson à gaz, qui comporte une pluralité N de clapets d'ouverture / fermeture (6) actionnables à l'aide d'une tige rotative (11) du robinet de gaz (1), dans lequel chacun des clapets d'ouverture / fermeture (6) comprend un corps de clapet (7) mobile, un ressort de fermeture (8) et un siège de clapet (9), et un dispositif d'encliquetage (18) agencé pour encliqueter la tige (11) dans des positions d'angle de rotation prédéterminées (P₀-P₉), où une des positions d'angle de rotation (P₀-P₉) prédéterminées de la tige (11) est associée à chacun des clapets d'ouverture / fermeture (6) de la pluralité N des clapets d'ouverture / fermeture (6).

2. Robinet de gaz selon la revendication 1, **caractérisé en ce que** la pluralité des N clapets d'ouverture / fermeture (6) est agencée de façon circulaire, où le pas angulaire (α) des clapets d'ouverture / fermeture (6) agencés de façon circulaire correspond à un pas angulaire (β) des positions d'angle de rotation prédéterminées (P₀-P₉) de la tige (11).

3. Robinet de gaz selon la revendication 1 ou 2, **caractérisé en ce que** le dispositif d'encliquetage (18) comprend une broche d'encliquetage (19) qui est montée sur la tige (11) et une rondelle d'encliquetage (23) disposée sur une plaque de recouvrement (17) d'un logement (15) du robinet de gaz (1), la broche d'encliquetage (19) étant conçue pour s'engager par complémentarité de formes dans la rondelle d'encliquetage (23).

4. Robinet de gaz selon la revendication 3, **caractérisé en ce que** la rondelle d'encliquetage (23) comprend des encoches (24-33), où une encoche respective (24-33) est associée à chaque position d'angle de rotation prédéterminée (P₀-P₉) de la tige (11).

5. Robinet de gaz selon la revendication 3 ou 4, **caractérisé en ce que** la broche d'encliquetage (19) est reçue dans un alésage (20) de la tige (11) et est disposée verticalement à un axe longitudinal (22) de la tige (11), dans lequel la broche d'encliquetage (19) fait saillie depuis l'alésage (20) de la tige (11) de façon asymétrique.

6. Robinet de gaz selon l'une des revendications 3 à 5, **caractérisé en ce que** la broche d'encliquetage (19) est précontrainte contre la rondelle d'encliquetage (23) au moyen d'un dispositif élastique (34).

7. Robinet de gaz selon la revendication 6, **caractérisé en ce qu'**une rondelle d'arrêt (35) est disposée entre la broche d'encliquetage (19) et le dispositif élastique (34), laquelle rondelle comporte un frein d'arrêt anti-rotation (36) qui est conçu de manière à s'engager dans une butée de rotation (39) d'une plaque de recouvrement (17) d'un logement de robinet de gaz (15) du robinet de gaz (1).

8. Robinet de gaz selon la revendication 7, **caractérisé en ce que** le dispositif élastique (34) est disposé entre le logement de robinet de gaz (15) et la rondelle d'arrêt (35).

9. Robinet de gaz selon la revendication 7 ou 8, **caractérisé en ce que** le logement de robinet de gaz (15) comprend une poche de réception (41) destinée à loger le dispositif élastique (34), dans lequel, lors d'un enfoncement de la tige (11) contre une force de ressort (F₃₄) du dispositif élastique (34) dans le logement de robinet de gaz (15), la rondelle d'arrêt (35) repose uniquement sur une paroi extérieure (43) de la poche de réception (41).

10. Robinet de gaz selon l'une quelconque des revendications 3 à 9, **caractérisé en ce que** la rondelle d'encliquetage (23) comporte une rainure de verrouillage (44), dans laquelle la broche d'encliquetage (19) peut être agencée dans une position initiale d'angle de rotation (Po) de la tige (11), le robinet de gaz (1) étant entièrement fermé dans la position initiale d'angle de rotation (Po).

11. Robinet de gaz selon la revendication 10, **caractérisé en ce que** la broche d'encliquetage (19) peut être soulevée par un enfoncement de la tige (11) opposé à une force de ressort (F₃₄) du dispositif élastique (34) dans un logement de robinet de gaz (15) du robinet de gaz (1) pour sortir de la rainure de verrouillage (44).

12. Robinet de gaz selon l'une quelconque des revendications 3 à 11, **caractérisé en ce que** la rondelle d'encliquetage (23) est comprimée par une plaque de recouvrement (17) d'un logement de robinet à gaz (15) du robinet de gaz (1).

13. Plaque de cuisson (3), notamment plaque de cuisson à gaz comprenant un robinet de gaz (1) selon l'une des revendications 1 à 12.

14. Appareil de cuisson, (4) notamment appareil de cuisson à gaz comprenant une plaque de cuisson (3) selon la revendication 13 et/ou un robinet de gaz (1) selon l'une des revendications 1 à 12.
